# EUROPÄISCHE PATENTSCHRIFT

(11) **EP 2 221 210 B1**
(45) Veröffentlichungstag und Bekanntmachung des Hinweises auf die Patenterteilung: **09.11.2011**
(21) Anmeldenummer: 09014481.7
(22) Anmeldetag: 20.11.2009
(51) Int. Cl.: B60N 2/12, B60N 2/20, B60N 2/225

(54) **Beschlag für einen Fahrzeugsitz**
Fitting for a vehicle seat
Armature pour un siège de véhicule

(30) Priorität: 17.12.2008 DE 102008063359
(43) Veröffentlichungstag der Anmeldung: 25.08.2010
(73) Patentinhaber: KEIPER GmbH & Co. KG, 67657 Kaiserslautern (DE)
(72) Erfinder: Thiel, Peter, 42899 Remscheid (DE)
(74) Vertreter: Patentanwälte Hosenthien-Held und Dr. Held

(56) Entgegenhaltungen:
- DE-A1- 19 715 764
- DE-A1-102006 003 243
- DE-B4- 10 105 282

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Die DE 197 15 764 A1 offenbart einen Beschlag der eingangs genannten Art mit einer Ver- und Feststelleinrichtung zur Einstellung der Lehnenneigung und einer Freischwenkeinrichtung. Der Beschlag dient bei einem zweitürigen Kraftfahrzeug dazu, einerseits mehrere, unterschiedlich geneigte Gebrauchsstellungen der Lehne für den Gebrauch des Fahrzeugsitzes durch einen Insassen zur Verfügung zu stellen, und andererseits durch das vorwärts erfolgende Freischwenken der Lehne den Zugang zum Fond zu ermöglichen. Für die Neigungseinstellung ist ein sitzteilfestes erstes Beschlagteil über eine Ver- und Feststelleinrichtung mit einem scheibenförmigen zweiten Beschlagteil verbunden, welches mittels einer Stellwelle entsprechend der gewünschten Lehnenneigung einstellbar ist. Ein lehnenfestes drittes Beschlagteil ist relativ zum zweiten Beschlagteil schwenkbar gelagert. Das zweite Beschlagteil weist zur Bildung der Freischwenkeinrichtung an seinem Außenumfang ein Zahnsegment auf, in welches eine am dritten Beschlagteil gelagerte Sperrklinke eingreift, die mit einem im Freigabesinn betätigbaren und im Sperrsinn selbst rückstellende Steuerhebel im Eingriff ist. Zur Bildung einer kompakten Einrichtung zur Freischwenkung und Vorschiebung des Sitzes zwecks ungehinderten Zuganges des Fonds zweitüriger Personenkraftwagen ist der Steuerhebel mit einem Klinkenhebel gekoppelt, der beim Freischwenken des dritten Beschlagteiles an einem am zweiten Beschlagteil gelagerten, ringförmigen Auslösehebel im Sinne der Entriegelung einer zwischen Sitzteil und Fahrzeugboden angeordneten Sitzlängseinstelleinrichtung angreift. Beim Beschlag handelt es sich um einen Getriebebeschlag mit vereinfachtem Planetengetriebe, weshalb eine Taumelbewegung der Beschlagteile relativ zueinander vorliegt, welche auch derart Einfluss auf das Auslösen der Entriegelung der Längseinstelleinrichtung nimmt, dass beim Freischwenken - je nach Getriebestellung - früher oder später eine Entriegelung der Längseinstelleinrichtung erfolgt.

Aus der DE 10 2006 044 489 A1 ist ein ähnlicher Beschlag für einen Fahrzeugsitz bekannt. In den Gebrauchsstellungen sind das dritte Beschlagteil und das Rastelement mittels einer am dritten Beschlagteil schwenkbar gelagerten Klinke verriegelt, welche in die Rückwärts-Schwenkrichtung mit ihrem Lagerbolzen an einem radial vorstehenden Anschlag anliegt und in die Vorwärts-Schwenkrichtung gegen einen Rastanschlag gespannt ist.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem am dritten Beschlagteil eine Anschlagfläche ausgebildet ist, welche bei einem Freischwenken der Lehne mit einem Betätigungselement für eine Sitzschienenentriegelung zusammenwirkt, kann das Auslösen der Sitzschienenentriegelung auf sehr einfache und platzsparende Weise in den Beschlag integriert werden. Die Anordnung des Betätigungselements macht die Betätigung der Sitzschienenentriegelung unabhängig von der eingestellten Neigung der Lehne, genauer gesagt von der bei der Einstellung der Lehnenneigung auftretenden, durch eine Überlagerung einer Relativdrehung mit einer Taumelbewegung entstehenden Taumelschleife. Die Taumelschleife und etwaige Toleranzen, auch zwischen den beiden Fahrzeugsitzseiten, werden kompensiert.

Diese Anlagefläche dient vorzugsweise auch der Begrenzung der Schwenkbewegung des dritten Beschlagteils beim Freischwenken, indem sie bei Erreichen der freigeschwenkten Stellung in Anlage an den Sperranschlag gelangt. Der Sperranschlag kann zusätzlich auch der Begrenzung des Lehnenneigungseinstellbereichs dienen.

Das Betätigungselement für die Sitzschienenentriegelung ist bevorzugt ein mit einem Ende eines Bowdenzugs verbundenes Element, wobei auch das Ende des Bowdenzugs selbst geeignet ausgebildet sein kann.

Das Betätigungselement für die Sitzschienenentriegelung ist bevorzugt in einer bogenförmigen Führungsbahn um die Achse geführt, so dass es die gleiche Drehachse wie die Anschlagfläche am dritten Beschlagteil oder - auf Grund der Taumelbewegung durch die Getriebebeschläge - eine in der Nähe dieser Drehachse liegende Drehachse aufweist.

Das Lager für das Betätigungselement für die Sitzschienenentriegelung ist vorzugsweise als Gehäuse ausgebildet, innerhalb dessen das Betätigungselement für die Sitzschienenentriegelung zumindest mit einem Teilbereich angeordnet ist. Es kann fest mit dem sitzteilfesten, ersten Beschlagteil, einem sitzteilfest angebrachten Adapter oder einem sonstigen Teil des Sitzteiles, beispielsweise der sitzteilfesten Sitzschiene verbunden sein. Insbesondere bevorzugt ist das Lager in direkter Nachbarschaft zu dem Sperranschlag angeordnet, so dass eine sichere Anbringung und Abstützung des Lagers möglich ist.

Insbesondere bevorzugt ist das Betätigungselement für die Sitzschienenentriegelung ein mit einem Ende eines Bowdenzugs verbundener Schieber, welcher in einer am Lager ausgebildeten Kurvenbahn verschiebbar geführt ist, wobei das Betätigungselement mit einem ersten Schieberende über das Lager übersteht und mit seinem anderen, zweiten Schieberende mit der Seele des Bowdenzugs fest verbunden ist, und die Hülle des Bowdenzugs am Lager angebracht ist. Dies ermöglicht eine einfache und kostengünstige Ausgestaltung des Betätigungselementes. Ferner kann einfach eine Vormontage des Beschlags erfolgen und die Anbringung der Sitzschienenentriegelung kann in einem späteren Montagevorgang erfolgen.

Die Erfindung ist vorzugsweise bei längseinstellbaren Fahrzeugsitzen von zweitürigen Kraftfahrzeugen mit zentrischem Freischwenken der Lehne einsetzbar, kann aber auch für andere längseinstellbare Fahrzeugsitze verwendet werden.

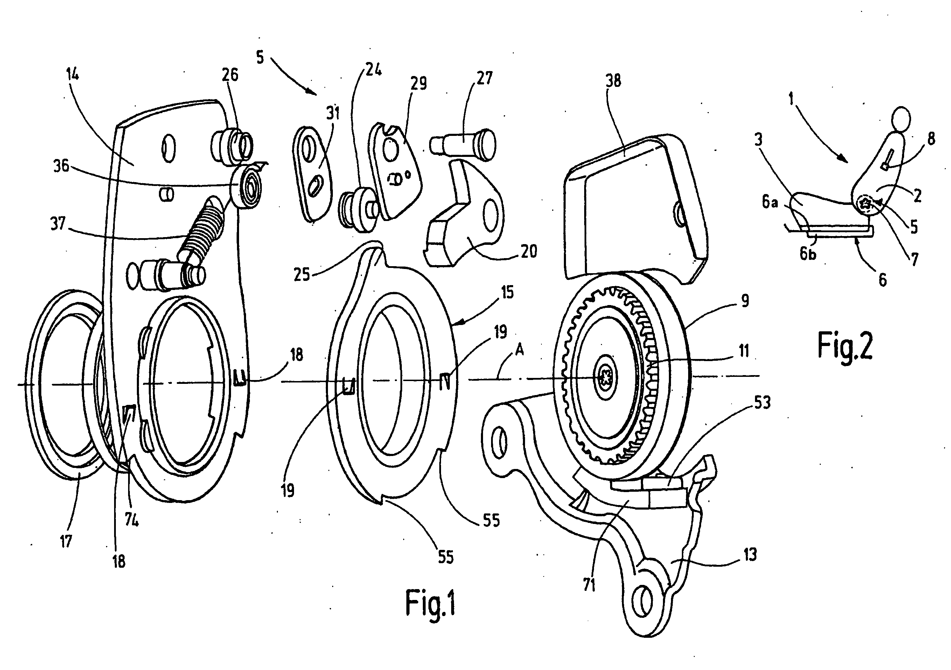

Im folgenden ist die Erfindung anhand eines in der Zeichnung dargestellten Ausführungsbeispiels näher erläutert. Es zeigen
- Fig. 1: eine Explosionsdarstellung des Ausführungsbeispiels, bei welcher die ganz rechts dargestellten Bauteile in einer anderen Perspektive gezeigt sind,
- Fig. 2: eine schematische Seitenansicht eines Fahrzeugsitzes,
- Fig. 3: eine Ansicht der für das Freischwenken relevanten Baugruppe des Aufüh- rungsbeispiels,
- Fig. 4: einen Schnitt entlang der Linie IV-IV in Fig. 3,

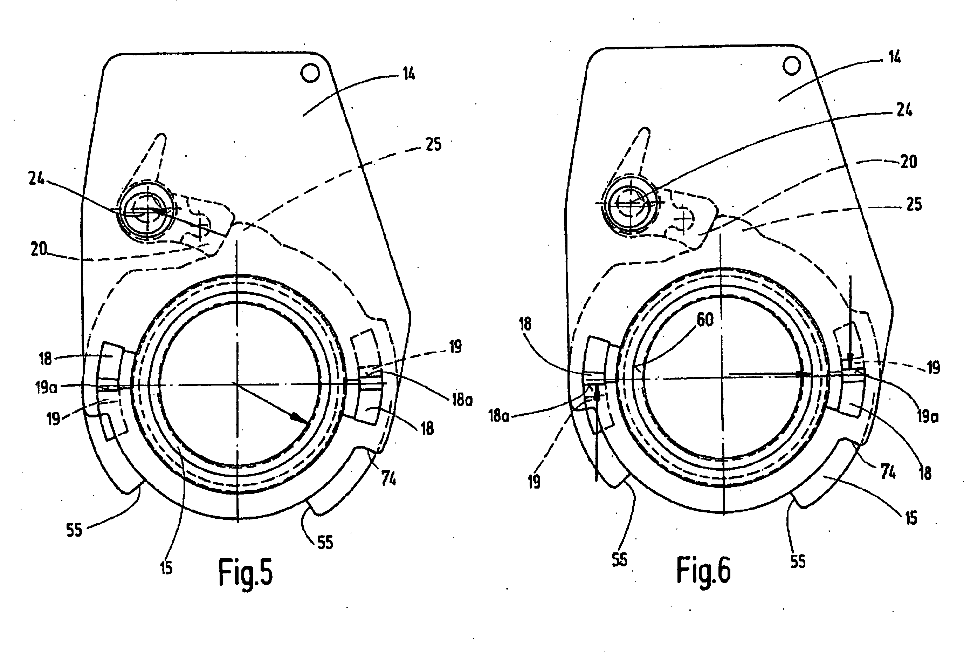

- Fig. 5: die Rückseite der in Fig. 3 dargestellten Baugruppe bei einer Belastung in Vorwärtsschwenkrichtung, wobei die Stütz- und Lagerkräfte durch Pfeile dargestellt sind,
- Fig. 6: die Rückseite der in Fig. 3 dargestellten Baugruppe bei einer Belastung in Rückwärtsschwenkrichtung, wobei die Stütz- und Lagerkräfte durch Pfeile dargestellt sind,

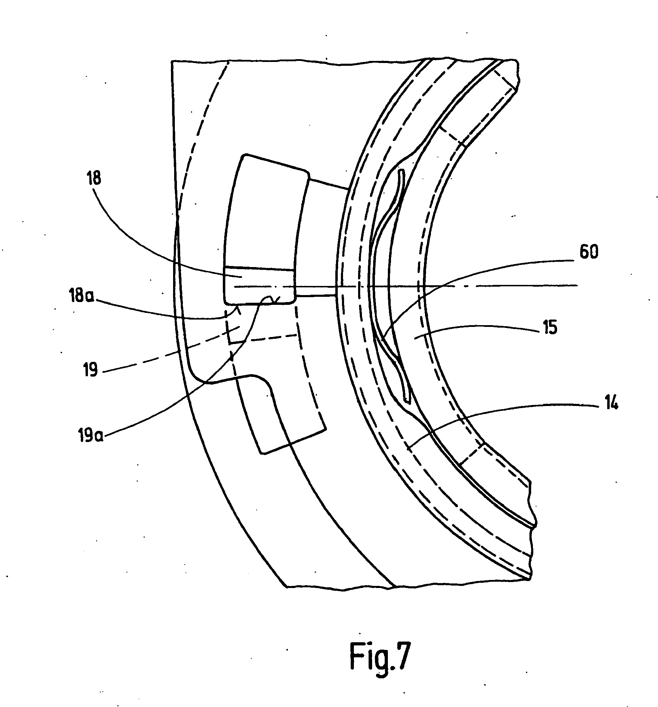

- Fig. 7: eine Teilansicht von Fig. 6 mit optionalem elastischem Element,

- Fig. 8: eine perspektivische Detailansicht des Beschlags im Bereich des Betäti- gungselements für die Sitzschienenentriegelung, und

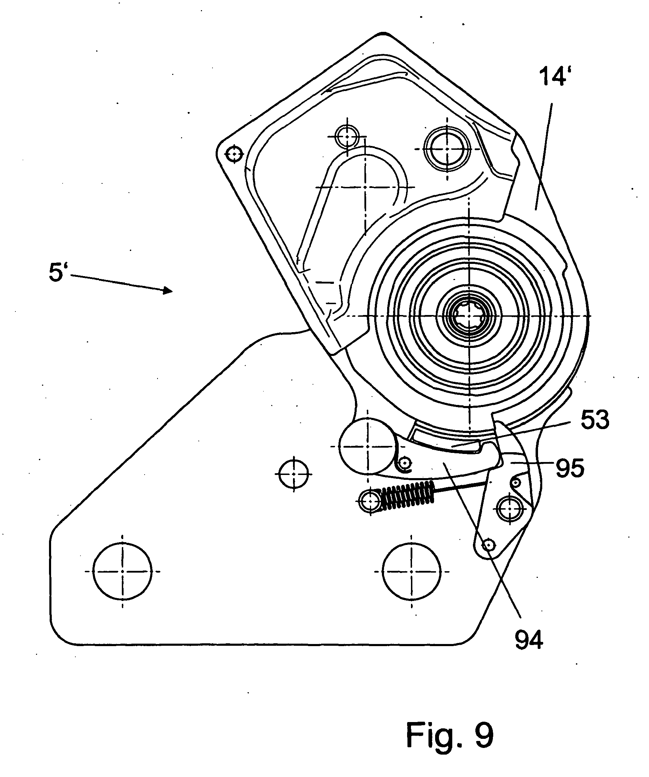

- Fig. 9: eine Seitenansicht des der auf der anderen Fahrzeugsitzseite angeordneten, zweiten Beschlags, der im Wesentlichen dem in der nachveröffentlichten DE 10 2008 008 935 A1 beschriebenen Beschlag entspricht.

Ein Fahrzeugsitz 1 für ein zweitüriges Kraftfahrzeug weist für die Neigungseinstellung und das Freischwenken seiner Lehne 2 relativ zu seinem Sitzteil 3 auf seinen beiden Seiten je einen Beschlag 5 auf. Auf der Außenseite des Fahrzeugsitzes 1 ist für die Neigungseinstellfunktion an einem der Beschläge 5 ein Handrad 7 und zwischen beiden Beschlägen 5 eine mit dem Handrad 7 verbundene Welle vorgesehen, während für die Freischwenkfunktion an der Lehne 2 ein Handhebel 8 beweglich angebracht ist. Der Fahrzeugsitz 1 ist mittels Sitzschienen 6 längsverschiebbar mit der Fahrzeugstruktur verbunden, Hierzu sind als Sitzschienen 6 beidseitig eine sitzteilfeste Oberschiene 6a und eine fahrzeugstrukturfeste Unterschiene 6b vorgesehen, welche relativ zueinander verschieblich und miteinander verriegelbar sind.

Jeder Beschlag 5 umfasst als Herz ein erstes Beschlagteil 9 und ein zweites Beschlagteil 11, welche in baulicher Hinsicht zusammen eine scheibenförmige Einheit bilden, wie sie beispielsweise in der DE 101 05 282 B4 beschrieben ist. Die beiden Beschlagteile 9 und 11 stehen im Ausführungsbeispiel mittels eines - vorliegend selbsthemmenden - Exzenterumlaufgetriebes miteinander in Getriebeverbindung, welches vorliegend ein spielfreies Feststellen der Beschlagteile 9 und 11 ermöglicht und zum Verstellen eine Relativdrehung der Beschlagteile 9 und 11 mit überlagerter Taumelbewegung erzwingt. Dadurch sind mehrere, stufenlos ineinander übergehende Gebrauchsstellungen definiert. Ein solcher Getriebebeschlag ist beispielsweise in der DE 44 36 101 A1 beschrieben. Es sind aber auch andere Getriebebeschläge und - theoretisch - auch Rastbeschläge (wie sie beispielsweise in der WO 00/44582 A1 beschrieben sind) einsetzbar.

Das erste Beschlagteil 9 ist mit der Struktur des Sitzteils 3 verbunden ("sitzteilfest"), indem ein sitzteilfest angebrachter Adapter 13 am ersten Beschlagteil 9 befestigt ist. Jeder Beschlag 5 umfasst ferner ein drittes Beschlagteil 14, welches mit der Lehnenstruktur der Lehne 2 verbunden ("lehnenfest") ist. Das plattenförmige dritte Beschlagteil 14 ist am zweiten Beschlagteil 11 auf der vom ersten Beschlagteil 9 abgewandten Seite gelagert und für das zentrisch erfolgende Freischwenken relativ zum zweiten Beschlagteil 11 um eine zentrale Achse A verschwenkbar, ansonsten aber mit dem zweiten Beschlagteil 11 verriegelt. Die Achse A und ihre Lage innerhalb des Fahrzeugsitzes 1 definieren die vorliegend verwendeten Richtungsangaben. Das Freischwenken, welches dem erleichterten Zugang der nächsten Sitzreihe dient, kann zugleich ein Übergang in eine Tischstellung mit näherungsweise horizontaler Lehne 2 sein, was die Lademöglichkeiten verbessert.

Ein ringförmiges Rastelement 15 am zweiten Beschlagteil 11 dient der schwenkbaren Lagerung des dritten Beschlagteils 14. Hierfür weist das Rastelement 15 beispielsweise einen Kragen auf, auf dem das dritte Beschlagteil 14 mit einer Lageröffnung, die ebenfalls in der Art eines Kragens ausgebildet sein kann, schwenkbar gelagert ist. Das Rastelement 15 ist direkt oder indirekt mit dem zweiten Beschlagteil 11 fest verbunden, beispielsweise mittels einer Laserschweißnaht (oder auf andere Weise). Eine ringförmige Befestigungscheibe 17, welche das dritte Beschlagteil 14 im Lagerbereich übergreift, ist zur axialen Sicherung des letzteren mit dem Rastelement 15 und optional mit dem zweiten Beschlagteil 11 fest verbunden. In radialer Richtung besteht ein gewisses Lagerspiel, und in axialer Richtung sind das dritte Beschlagteil 14 und das Rastelement 15 um bis zu einer Materialstärke voneinander beabstandet. In abgewandelter Ausführung ist das dritte Beschlagteil 14 auf einem Kragen oder dergleichen der Befestigungsscheibe 17 gelagert und das mit letzterer fest verbundene Rastelement 15 dient der axialen Sicherung.

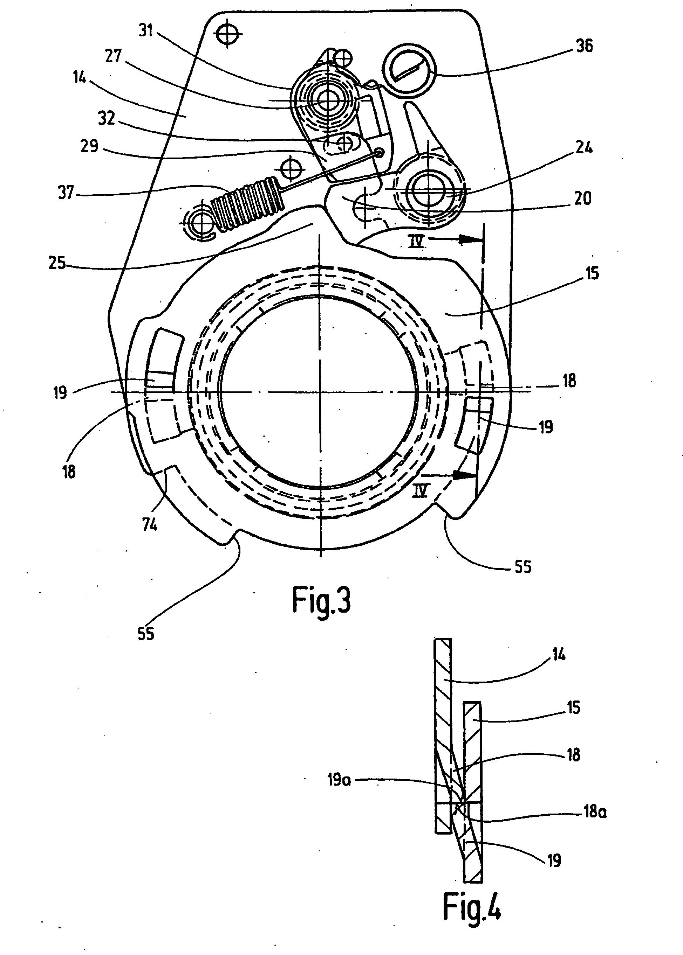

Als Anschlag, der in die Rückwärts-Schwenkrichtung der Lehne 2 (in Fig. 3 im Uhrzeigersinn) wirksam ist, weist das dritte Beschlagteil 18 wenigstens einen, vorliegend zwei diagonal bezüglich der Achse A gegenüberliegende erste Anschlagnocken 18 und das Rastelement 15 in gleicher Anzahl und entsprechender Anordnung zweite Anschlagnocken 19 auf. Jeder erste Anschlagnocken 18, welcher eine in Rückwärts-Schwenkrichtung weisende erste Anschlagfläche 18a aufweist, wirkt mit genau einem zweiten Anschlagnocken 19 zusammen, welcher eine in Vorwärts-Schwenkrichtung weisende zweite Anschlagfläche 19a aufweist. Die paarweise in Umfangsrichtung verteilten Anschlagnocken 18 und 19 sind von der Achse A radial beabstandet angeordnet, durch eine axiale, einander zugewandte Ausstellung im Material in Zungenform ausgebildet und mit ihren am freien Ende der Zungen stirnseitig befindlichen Anschlagflächen 18a und 19a in Umfangsrichtung einander zugewandt.

Während bekannte Anschläge radial über den äußeren Rand des zugeordneten Bauteils überstehen, stehen die Anschlagnocken 18 und 19 nur axial vor, d.h. sie sind radial innerhalb des äußeren Randes des zugeordneten Bauteils angeordnet. Die Anschlagnocken 18 und 19 sind so ausgestellt, dass sie mit ihren Anschlagflächen 18a und 19a möglichst weit in den Zwischenraum zwischen drittem Beschlagteil 14 und Rastelement 15 ragen. Die Ausstellungen bewirken, dass auf der jeweiligen Rückseite eine Vertiefung im Material entsteht. Die Anschlagflächen 18a und 19a verlaufen in axialer und radialer Richtung, d.h. ohne Komponente in Umfangsrichtung, so dass sie im Falle einer Anlage die Kräfte optimal übertragen können. Der durch die Anschlagnocken 18 und 19 gebildete Anschlag begrenzt die Schwenkbewegung des dritten Beschlagteils 14 einseitig nach hinten, und zwar sowohl im Normalfall nach dem Freischwenken als auch im (Heck-)Crashfall. Derartige Anschlagnocken 18 und 19 sind auch in der DE 10 2008 029 438 A1 beschrieben.

Eine Klinke 20 ist mittels eines Lagerbolzens 24 schwenkbar am dritten Beschlagteil 14 auf der dem zweiten Beschlagteil 11 (und dem Rastelement 15) zugewandten Seite gelagert. Zum Verriegeln und zur Begrenzung der Schwenkbewegung des dritten Beschlagteils 14 nach vorne im (Front-)Crashfall ist in radialer Verlängerung der Klinke 20 am Rastelement 15 ein Rastanschlag 25 vorgesehen, vorzugsweise angeformt. Der Lagerbolzen 24 ist als Exzenterbolzen ausgebildet, d.h. er ist um eine zur Schwenkachse der Klinke 20 versetzte Achse im dritten Beschlagteil 14 relativ zu diesem drehbar gelagert. Zum Ausgleich der Fertigungstoleranzen ist der Lagerbolzen 24 so eingestellt und fixiert, dass die Klinke 20 mit einen maximalem Klinkeneingriff spielfrei am zweiten Rastanschlag 25 anliegt, allerdings außerhalb des Winkelbereichs der Selbsthemmung.

Parallel zum Lagerbolzen 24 ist im dritten Beschlagteil 14 mittels einer Lagerbuchse 26 eine Entriegelungswelle 27 drehbar gelagert, auf welcher drehfest (worunter auch eine einstückige Ausbildung zu verstehen ist) ein Fangelement 29 und schwenkbar ein Spannelement 31 sitzt. Das Fangelement 29 und das Spannelement 31 sind um die durch die Entriegelungswelle 27 definierte gemeinsame Achse schwenkbar und bei verriegeltem dritten Beschlagteil 14 auf die Klinke 20 ausgerichtet. Die Funktionsweise von Fangelement 29 und Spannelement 31 ist in der DE 44 39 644 A1 beschrieben.

Das Spannelement 31 liegt mit einer exzentrisch zur Entriegelungswelle 27 gekrümmten Spannfläche in einem Winkel außerhalb des Selbsthemmungsbereichs an einer Anlagefläche der Klinke 20 an. Das Spannelement 31 wird von einer als Spiralfeder ausgebildeten ersten Feder 36 vorgespannt, so dass es die Klinke 20 beaufschlagt (und diese gegen den Rastanschlag 25 spannt). Dadurch ist das dritte Beschlagteil 14 spielfrei mit dem Rastelement 15 und damit mit dem zweiten Beschlagteil 11 verriegelt. Das Fangelement 29 wird von einer als Schrauben-Zugfeder ausgebildeten zweiten Feder 37 beaufschlagt und liegt an einem Anschlag des dritten Beschlagteils 14 an. Im Normalfall, d.h. für den normalen Sitzgebrauch, wird die Klinke 20 durch das Spannelement 31 in ihrer Position gehalten, und das Fangelement 29 ist in geringem Abstand zur Klinke 20 angeordnet. Im Crashfall, wenn Crashkräfte auf die Klinke 20 wirken, kann das Spannelement 31 wegen der fehlenden Selbsthemmung öffnen. Nach einer geringfügigen Schwenkbewegung der Klinke 20 gelangt diese in Anlage an das Fangelement 29. Das Fangelement 29 stützt dann die Klinke 20 ab, welche innerhalb des Selbsthemmungsbereichs am Fangelement 29 anliegt, vorzugsweise tangential oder konzentrisch und möglichst flächig. Damit wird verhindert, dass die Klinke 20 (weiter) öffnet.

Das Fangelement 29 und das Spannelement 31 sind miteinander mittels einer Schlitz-Zapfen-Führung 32 mit einem Leerweg auf Mitnahme gekoppelt. Hierfür weist das Spannelement 31 einen um die Entriegelungswelle 27 gekrümmten Schlitz auf, in welchen ein Zapfen des Fangelementes 29 greift. Ein am dritten Beschlagteil 14 befestigter Deckel 38 deckt die Klinke 20 samt Lagerbolzen 24, das Fangelement 29, das Spannelement 31 und die Federn 36 und 37 ab und schützt diese vor Verschmutzung.

Um den Einstellbereich bei der Neigungseinstellung zu begrenzen, d.h. die relative Verdrehung des ersten Beschlagteils 9 und des zweiten Beschlagteils 11 zu begrenzen, steht vom Adapter 13 parallel zur Achse A ein Sperranschlag 53 ab, den zwei Begrenzungsanschläge 55 des Rastelementes 15 zwischen sich aufnehmen. Durch Zusammenwirken mit einem entsprechenden Begrenzungsanschlag am dritten Beschlagteil 14 kann der Sperranschlag 53 auch das Freischwenken der Lehne 2, d.h. die Schwenkbewegung des dritten Beschlagteils 14 nach vorne, begrenzen.

Auf der vom zweiten Beschlagteil 11 abgewandten Seite des dritten Beschlagteils 14 ist mit der Entriegelungswelle 27 ein Arm oder Hebel drehfest verbunden, au welchem ein mit dem Handhebel 8 in Wirkverbindung stehender Seilzug befestigt ist. Alternativ kann die Entriegelungswelle 27 auch über einen elektrischen Aktuator, beispielsweise einen Stellmotor oder dergleichen, betätigt werden. Zum Entriegeln des dritten Beschlagteils 14 zu Beginn des Freischwenkens wird die Entriegelungswelle 27 um ihre eigene Achse gedreht. Die Entriegelungswelle 27 nimmt das Fangelement 29 mit, um es zu öffnen, d.h. sie trennt und/oder entfernt es von der Klinke 20. Dabei nimmt das Fangelement 29 mittels der Schlitz-Zapfen-Führung 32 das Spannelement 31 mit, um die Klinke 20 freizugeben. Das schwenkende Fangelement 29 kommt in Anlage an einen - im Wesentlichen radial abstehenden - Entriegelungsfinger der Klinke 20 und zieht diese dadurch auf bzw. unterstützt diese beim Öffnen. Die Klinke 20 ist damit vollständig geöffnet.

Wenn bei den bekannten Lösungen, bei denen die Klinke 20 oder der Lagerbolzen 24 mit einem weiteren Rastnocken am Rastelement 15 zusammenwirken, um das Schwenken des dritten Beschlagteils 14 in Rückwärts-Schwenkrichtung zu begrenzen, die Lehne 2 belastet wird und die Richtung der Belastung von der Vorwärts-Schwenkrichtung zur Rückwärts-Schwenkrichtung wechselt, so wechselt dadurch die Richtung der Lagerkraft um einen Winkel. Dieser Winkel entspricht ungefähr einem Winkel zwischen den Anlagestellen der beiden Rastnocken an der Klinke 20, wobei der Lagerbolzen 24 als Scheitel dient. Dieser Winkel kann also aufgrund der geringen Abstände recht groß werden, kann also beispielsweise 90° betragen. Das radiale Spiel an der Lagerstelle zwischen drittem Beschlagteil 14 und Rastelement 15 erlaubt beim Wechsel der Belastungsrichtung eine kleine Relativbewegung unter Bildung von Geräuschen.

Vorliegend sind die Abstände zwischen der Anlagestelle des Rastnocken 25 an der Klinke 20 und den Anschlagnocken 18 und 19 deutlich größer, so dass der Winkel, um den die Lagerkraft bei einem Wechsel der Belastungsrichtung wechselt, deutlich kleiner ist. Um die geräuschbildende Relativbewegung zwischen drittem Beschlagteil 14 und Rastelement 15 in deren Lagerstelle zu verhindern, ist vorzugsweise ein elastisches Element 60, beispielsweise eine Stahlfeder oder ein Kunststoffelement vorgesehen. Dieses in radialer Richtung wirkende elastische Element 60 ist in der Lagerstelle zwischen drittem Beschlagteil 14 und Rastelement 15 angeordnet, also vorzugsweise zwischen dem Kragen des Rastelementes 15 und dem Rand der Lageröffnung des dritten Beschlagteils 14. Damit wird das radiale Spiel in dieser Lagerstelle eliminiert.

Um einem Insassen der zweiten Sitzreihe das Ein- und Aussteigen zu erleichtern, ist bei dem für einen längseinstellbaren Fahrzeugsitz 1 vorgesehenen Beschlag 5 auf einer Fahrzeugsitzseite neben der Freischwenkfunktion auch ein Betätigen der Sitzschienenentriegelung (letztere nicht näher dargestellt) vorgesehen, so dass bei einem Freischwenken der Lehne 2 aus der Gebrauchsstellung in die freigeschwenkte Stellung gleichzeitig auch die Sitzschienen 6 entriegelt werden und der Fahrzeugsitz 1 in die vorderste Stellung bewegt werden kann. Dabei werden die entriegelten Oberschienen 6a relativ zu den Unterschienen 6b verschoben. Die Sitzschienenentriegelung, die Sitzschienen 6 selbst und ihre Verriegelung können entsprechend der EP 1 324 896 B 1 ausgebildet sein.

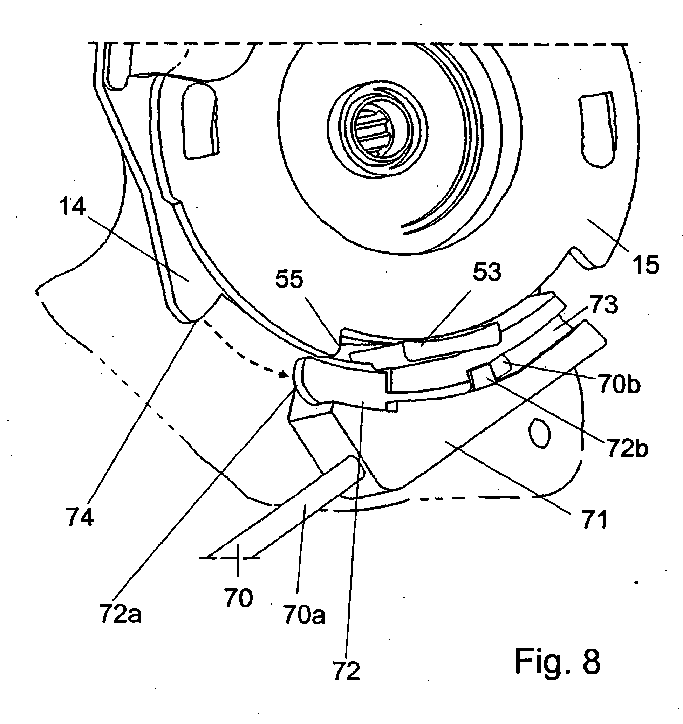

Für die Entriegelung der Sitzschienen 6 in Verbindung mit der Freischwenkfunktion ist ein Bowdenzug 70 vorgesehen, welcher mit einem Ende an einem Betätigungselement des Beschlags 5, welches am sitzteilfesten ersten Beschlagteil 9 angeordnet ist, beispielsweise am Adapter 13, und mit dem anderen Ende an der Sitzschienenentriegelung endet. Die Kraftübertragung im Bereich der Sitzschienen 6 kann auf an sich bekannte Weise erfolgen, so dass hierauf nicht näher eingegangen wird. Die Funktionsweise des Bowdenzugs 70 im Bereich des Beschlags 5 wird im Folgenden unter Bezugsnahme auf Fig. 8 näher erläutert.

Der Bowdenzug 70 endet in direkter Nachbarschaft des Sperranschlags 53, welcher den Bereich der Neigungseinstellbarkeit begrenzt. Hierbei stützt sich die Hülle 70a des Bowdenzugs 70 an einem als Gehäuse ausgebildeten Lager 71 ab, die Seele 70b des Bowdenzugs 70 ist mit einem beweglich im Lager 71 gelagerten Betätigungselement 72 verbunden. Das als Schieber ausgebildete Betätigungselement 72 ist in in einer am Lager 71 ausgebildeten, im Wesentlichen kreisbogenförmigen Führungsbahn 73 verschiebbar angeordnet, wobei das Betätigungselement 72 mit seinem ersten Schieberende 72a über das Lager 71 übersteht und mit seinem zweiten Schieberende 72b mit der Seele 70b verbunden ist. Mit dem ersten, überstehenden Schieberende 72a wirkt im Falle eines Freischwenkens der Lehne 2 eine an einem Vorsprung des dritten Beschlagteils 14 ausgebildete Anschlagfläche 74 zusammen, welche sich in radialer Richtung erstreckt.

Die Funktion dieser Vorrichtung ist Folgende: Wird über den Handhebel 8 die Lehne 2 entriegelt, erfolgt eine Schwenkbewegung des dritten Beschlagteils 14 um die Achse A (in Fig. 8 entgegen dem Uhrzeigersinn, wie durch den gestrichelten Pfeil angedeutet). Nach einem Teil der Schwenkbewegung erreicht die Anschlagfläche 74 des dritten Beschlagteils 14 das überstehende, erste Schieberende 72a des Betätigungselementes 72, gelangt also in Anlage an das Betätigungselement 72. Mit der weiteren Schwenkbewegung drückt das dritte Beschlagteil 14 mit seiner Anschlagfläche 74 das Betätigungselement 72 entlang der Führungsbahn 73 des Lagers 71. Dabei wird mittels des zweiten Schieberendes 72b an der Seele 70b des Bowdenzugs 70 gezogen, während die Hülle 70a in ihrer Position unverändert bleibt. Diese Relativverschiebung von Seele und Hülle bewirkt am anderen Ende des Bowdenzugs 70 eine Entriegelung der Sitzschienen 6, so dass - auf Grund des Drucks von hinten auf die Lehne 2 durch den Bediener - nach dem Entriegeln auch ein Verschieben des Fahrzeugsitzes 1 nach vorne erfolgt. Die Schwenkbewegung wird durch die Anlage der Anschlagfläche 74 an den Sperranschlag 53 begrenzt, wie oben erwähnt, womit die freigeschwenkte Stellung erreicht ist. Da in der Ausgangsstellung der Abstand zwischen dem ersten Schieberende 72a und dem Sperranschlag 53 (d.h. dessen näher gelegenen Seite in Umfangsrichtung der Achse A) konstant und unabhängig von der Taumelschlaufe bei der Einstellung der Lehnenneigung ist, ist auch der von der Anschlagfläche 74 und dem Betätigungselement 72 ab der Anlage aneinander zurückgelegte Weg und damit der Betätigungsweg der Seele 70b des Bowdenzugs 70 konstant und unabhängig von der Taumelschleife, d.h. von der eingestellten Neigung der Lehne 2. Somit werden die Taumelschleife und die Toleranzen kompensiert.

Soll die Lehne 2 aus der freigeschwenkten Stellung wieder nach hinten in ihre Gebrauchsstellung geschwenkt werden, so wird in einem ersten Schritt durch die Krafteinwirkung auf die Lehne 2 nach hinten bei entriegelten Sitzschienen der Fahrzeugsitz 1 nach hinten verschoben, wobei die Ausgangs-Sitzlängsposition vor dem Verschieben nach vorne durch eine Memoryvorrichtung, wie beispielsweise in der EP 1474 308 B 1 beschrieben, deren diesbezüglicher Offenbarungsgehalt ausdrücklich einbezogen wird, gespeichert sein kann. Ansonsten muss die gewünschte Position neu eingestellt werden. Wird die Lehne 2 weiter nach hinten gezogen, so beginnt eine Schwenkbewegung, durch welche das dritte Beschlagteil 14 relativ zum Lager 71 geschwenkt wird, wodurch die Anschlagfläche 74 außer Anlage mit dem ersten Schieberende 72a des Betätigungselementes 72 gelangt. Auf Grund einer Federvorbelastung des Bowdenzugs 70 wird das Betätigungselement 72 wieder mit seinem ersten Schieberende 72a aus dem Lager 71 geschoben, wodurch am anderen Ende des Bowdenzugs die Sitzschienenentriegelung freigegeben wird und die Sitzschienen 6 wieder verriegeln.

Da die Schienenentriegelung sinnvollerweise nur von einer Fahrzeugsitzseite aus erfolgt, ist auf der dem vorbeschriebenen Beschlag 5 gegenüberliegenden Fahrzeugsitzseite kein Betätigungselement für die Schienenentriegelung vorgesehen. Gleichwohl ist beim dortigen Beschlag 5' vorzugsweise der Sperranschlag 53, beispielsweise auch zur Begrenzung des Lehnenneigungseinstellbereichs, und optional auch die Anschlagfläche 74 an seinem dritten Beschlagteil 14', ausgebildet. Es ist zudem möglich, dass der dortige Beschlag 5' eine Festlegeklinke 94 aufweist, welche beispielsweise am dritten Beschlagteil 14' gelagert ist, und welche bei Erreichen der freigeschwenkten Stellung mit dem Sperranschlag 53 zusammenwirkt, um das dritte Beschlagteil 14' sitzteilfest (und lösbar) festzulegen, beispielsweise indem sich die Festlegeklinke 94 in Umfangsrichtung um die Achse A hinter dem Sperranschlag 53 einhakt. Die Festlegeklinke 94 wird dann beispielsweise durch einen Hebel 95 gesichert, der vorzugsweise zugleich durch die Memoryvorrichtung der Sitzschienen schaltbar ist und dann die Festlegeklinke 94 bei Erreichen der Ausgangs-Sitzlängsposition wenigstens mittelbar öffnet. Ein derartiger Beschlag 5' ist beispielsweise in der o.g. nachveröffentlichten DE 10 2008 008 935 A1 beschrieben, deren diesbezüglicher Offenbarungsgehalt ausdrücklich einbezogen wird. Ansonsten stimmen die Beschläge 5 und 5' weitgehend überein. Da die Sperranschläge 53 der beiden Beschläge 5 und 5' gleich angeordnet sind und damit das Zusammenwirken mit der Anschlagfläche 74 und der Festlegeklinke 94 besser aufeinander abstimmbar ist, werden die Toleranzen zwischen den beiden Fahrzeugsitzseiten kompensiert.

### Bezugszeichenliste

- 1: Fahrzeugsitz
- 2: Lehne
- 3: Sitzteil
- 5, 5': Beschlag
- 6: Sitzschiene
- 6a: Oberschiene
- 6b: Unterschiene
- 7: Handrad
- 8: Handhebel
- 9: erstes Beschlagteil
- 11: zweites Beschlagteil
- 13: Adapter
- 14, 14': drittes Beschlagteil
- 15: Rastelement
- 17: Befestigungsscheibe
- 18: erster Anschlagnocken
- 18a: erste Anschlagfläche
- 19: zweiter Anschlagnocken
- 19a: zweite Anschlagfläche
- 20: Klinke
- 24: Lagerbolzen
- 25: Rastanschlag
- 26: Lagerbuchse
- 27: Entriegelungswelle
- 29: Fangelement
- 31: Spannelement
- 32: Schlitz-Zapfen-Führung
- 36: erste Feder

- 37: zweite Feder
- 38: Deckel
- 53: Sperranschlag
- 55: Begrenzungsanschlag
- 60: elastisches Element
- 70: Bowdenzug
- 70a: Hülse
- 70b: Seele
- 71: Lager
- 72: Betätigungselement
- 72a: erstes Schieberende
- 72b: zweites Schieberende
- 73: Führungsbahn
- 74: Anschlagfläche
- 94: Festlegeklinke
- 95: Hebel
- A: Achse

## Patentansprüche

1. Beschlag für einen Fahrzeugsitz, insbesondere für einen Kraftfahrzeugsitz, der eine Lehne (2) und eine Sitzteil (3) aufweist, mit einem sitzteilfesten ersten Beschlagteil (9), einem zweiten Beschlagteil (11), welches für die Neigungseinstellung der Lehne (2) des Fahrzeugsitzes (1) zwischen mehreren Gebrauchsstellungen relativ zum ersten Beschlagteil (9) verdrehbar ist, und einem lehnenfesten dritten Beschlagteil (14), welches mit dem zweiten Beschlagteil (11), insbesondere mit einem mit dem zweiten Beschlagteil (11) fest verbundenen Rastelement (15), verriegelbar und für ein Freischwenken der Lehne (2) relativ zum zweiten Beschlagteil (11) um eine Achse (A) schwenkbar ist, wobei die Schwenkbewegung des dritten Beschlagteils (14) aus der Gebrauchsstellung in die freigeschwenkte Stellung durch einen Sperranschlag (53) begrenzt ist, **dadurch gekennzeichnet, dass** am dritten Beschlagteil (14) eine Anschlagfläche (74) ausgebildet ist, welche beim Freischwenken der Lehne (2) mit einem Betätigungselement (72) für eine Sitzschienenentriegelung zusammenwirkt, das mittels eines sitzteilfesten Lagers (71) beweglich gelagert ist.

2. Beschlag nach Anspruch 1, **dadurch gekennzeichnet, dass** die Anschlagfläche (74) die Schwenkbewegung des dritten Beschlagteils (14) begrenzt, indem sie bei Erreichen der freigeschwenkten Stellung in Anlage an den sitzteilfesten Sperranschlag (53) gelangt.

3. Beschlag nach Anspruch 2, **dadurch gekennzeichnet, dass** das Lager (71) in direkter Nachbarschaft zu dem Sperranschlag (53) angeordnet ist.

4. Beschlag nach einem der vorhergehenden Ansprüche, **dadurch gekennzeichnet, dass** das Betätigungselement (72) für die Schienenentriegelung während des Zusammenwirkens mit der Anschlagfläche einen Weg zurücklegt, der unabhängig von der Neigungseinstellung der Lehne (2) ist.

5. Beschlag nach einem der vorhergehenden Ansprüche, **dadurch gekennzeichnet, dass** das Betätigungselement (72) für die Sitzschienenentriegelung mit einem Ende eines Bowdenzugs (70) verbunden ist, dessen anderes Ende mit der Sitzschienenentriegelung zusammenwirkt.

6. Beschlag nach einem der vorhergehenden Ansprüche, **dadurch gekennzeichnet, dass** das Betätigungselement (72) für die Sitzschienenentriegelung in einer bogenförmigen Führungsbahn (73) um die Achse (A) geführt ist.

7. Beschlag nach Anspruch 5 und 6, **dadurch gekennzeichnet, dass** der Bowdenzug (70) in seinem Endbereich tangential zur bogenförmigen Führungsbahn (73) verläuft.

8. Beschlag nach einem der vorhergehenden Ansprüche, **dadurch gekennzeichnet, dass** das Lager (71) als Gehäuse ausgebildet ist, innerhalb dessen das Betätigungselement für die Sitzschienenentriegelung zumindest mit einem Teilbereich angeordnet ist, wobei das Lager (71) fest mit dem sitzteilfesten ersten Beschlagteil (9), einem sitzteilfest angebrachten Adapter (13) oder einem sonstigen Teil des Sitzteils (3), insbesondere einer Oberschiene (6a), verbunden ist.

9. Beschlag nach einem der vorhergehenden Ansprüche, **dadurch gekennzeichnet, dass** das Betätigungselement (72) für die Sitzschienenentriegelung ein mit einem Ende eines Bowdenzugs (70) verbundener Schieber ist, welcher in einer in dem Lager (71) ausgebildeten Kurvenbahn (73) verschiebbar geführt ist, wobei das Betätigungselement (72) mit einem ersten Schieberende (72a) über das Lager (71) übersteht und mit seinem anderen, zweiten Schieberende (72b) mit der Seele (70b) des Bowdenzugs (70) fest verbunden ist, und die Hülle (70a) des Bowdenzugs (70) am Lager (71) angebracht ist.

10. Beschlag nach Anspruch 9, **dadurch gekennzeichnet, dass** Seele (70b) und Hülle (70a) des Bowdenzugs (70) derart mit einer Feder vorgespannt sind, dass das Betätigungselement (72), insbesondere mit einem ersten Schieberende (72a), aus dem Lager (71) bewegt wird.

11. Beschlag nach einem der vorhergehenden Ansprüche, **dadurch gekennzeichnet, dass** die Anschlagfläche (74) am dritten Beschlagteil (14) in radialer Richtung zur Achse (A) verlaufend ausgebildet ist.

12. Beschlag nach einem der vorhergehenden Ansprüche, **dadurch gekennzeichnet, dass** ein Anschlag (18, 19) zum einseitigen Begrenzen der Schwenkbewegung des dritten Beschlagteils (14) von der freigeschwenkten Stellung in die Gebrauchsstellung vorgesehen ist.

13. Fahrzeugsitz, **gekennzeichnet durch** einen Beschlag (5) nach einem der vorhergehenden Ansprüche.

14. Fahrzeugsitz nach Anspruch 13, **dadurch gekennzeichnet, dass** auf der dem Beschlag (5) gegenüberliegenden Fahrzeugsitzseite ein Beschlag (5') angeordnet ist, mit dessen Sperranschlag (53) eine Festlegeklinke (94) zusammenwirkt, um das dritte Beschlagteil (14') in der freigeschwenkten Stellung festzulegen.

## Claims

1. A fitting for a vehicle seat, in particular for a motor vehicle seat, having a backrest (2) and a seat part (3), with a first fitting part (9) which is fixed with respect to the seat part and with a second fitting part (11) which, for adjusting the inclination of the backrest (2) of the vehicle seat (1) is pivotable between several positions of use relative to the first fitting part (9) and with a third fitting part (14) which is fixed with respect to the backrest and which is lockable with the second fitting part (11), particularly with a detent element (15) which is fixedly connected to the second fitting part (11) and which is pivotable about an axis (A), for a free pivoting of the backrest (2) relative to the second fitting part (11), wherein the pivoting movement of the third fitting part (14) from the use position to the free-pivoted position is limited by a locking stop (53), **characterised in that** a stop face (74) is configured at the third fitting part (14), such stop surface, for a seat-rail unlocking, cooperating with an operating element (72) which is movably supported by means of a bearing (71) which is fixed with respect to the seat part.

2. A fitting according to Claim 1, **characterised in that** the stop face (74) limits the pivoting movement of the third fitting part (14) by getting to bear against the locking stop (53) which is fixed with respect to the seat part, when the free-pivoted position is reached.

3. A fitting according to Claim 2, **characterized in that** the bearing (71) is arranged in direct vicinity to the locking stop (53).

4. A fitting according to one of the preceding claims, **characterized in that** the operating element (72) for rail unlocking, during the cooperation with the stop face, travels a distance which is independent of the inclination adjustment of the backrest (2).

5. A fitting according one of the preceding claims, **characterized in that** the operating element (72) for seat rail unlocking is connected with one end of a Bowden cable (70), the other end of which cooperates with the seat-rail unlocking.

6. A fitting according to one of the preceding claims, **characterized in that** the operating element (72) for seat rail unlocking is guided aboutthe axis (A) in an arc-shaped guideway (73).

7. A fitting according to Claim 5 and 6, **characterized in that** the Bowden cable (70), in its end section, runs tangentially to the arc-shaped guideway (73).

8. A fitting according to one of the preceding claims, **characterized in that** the bearing (71) is configured as a housing, within which the operating element (72) for seat-rail unlocking is arranged with at least a partial section, wherein the bearing (71) is fixedly connected with the first fitting part (9) which is fixed with respect to the seat part, with an adapter (13) which is fitted fixedly with respect to the seat part, or with another part of the seat part (3), particularly with an upper rail (6a).

9. A fitting according to one of the preceding claims, **characterized in that** the operating element (72) for seat-rail unlocking is a slide which is connected with one end of a Bowden cable (70), such slide being slidably guided in a curved track (73) which is configured in the bearing (71), wherein the operating element (72) protrudes over the bearing (71) with a first slide end (72a) and with its other, second slide end (72b) is fixedly connected with the core (70b) of the Bowden cable (70), and the jacket (70a) of the Bowden cable (70) is fitted to the bearing (71).

10. A fitting according to Claim 9, **characterized in that** the core (70b) and the jacket (70a) of the Bowden cable (70) are biased with a spring in such a way that the operating element (72), particularly with a first slide end (72a), is moved out of the bearing (71).

11. A fitting according to one of the preceding claims, **characterized in that** the stop face (74) at the third fitting part (14) is configured to run in the radial direction with respect to axis (A).

12. A fitting according to one of the preceding claims, **characterized in that** a stop (18, 19) for a unilateral limitation of the pivoting movement of the third fitting part (14) from the freely pivoted position into the use position is provided.

13. A vehicle seat **characterised by** a fitting (5) according to one of the preceding claims.

14. A vehicle seat according to Claim 13, **characterised in that**, on the vehicle seat side opposing the fitting (5), a fitting (5') is arranged, with the locking stop (53) of which a fixing pawl (94) is cooperating in order to fix the third fitting part (14') in the free-pivoted position.

## Revendications

1. Ferrure pour un siège de véhicule, en particulier pour un siège de véhicule automobile, comprenant un dossier (2) et une partie d'assise (3), comportant une première pièce de ferrure (9) solidaire de la partie d'assise, une deuxième pièce de ferrure (11) qui peut pivoter par rapport à la première pièce de ferrure (9) afin de régler l'inclinaison du dossier (2) du siège de véhicule (1) entre plusieurs positions d'usage, et une troisième pièce de ferrure (14), solidaire du dossier, qui peut être verrouillée avec la deuxième pièce de ferrure (11), en particulier avec un élément d'encliquetage (15) solidaire de la deuxième pièce de ferrure (11) et qui peut pivoter par rapport à un axe (A) afin de libérer le pivotement du dossier (2) par rapport à la deuxième pièce de ferrure (11), le mouvement de pivotement de la troisième pièce de ferrure (14) entre la position d'usage et la position de libération du pivotement étant limité par une butée d'arrêt (53), **caractérisée par le fait que** la troisième pièce de ferrure (14) comporte une surface de butée (74) qui, lors de la libération du pivotement du dossier (2), coopère avec un élément d'actionnement (72) d'un déverrouillage des rails de siège qui est monté mobile sur un palier (71) solidaire de la partie d'assise.

2. Ferrure selon la revendication 1, **caractérisée par le fait que** la surface de butée (74) limite le mouvement de pivotement de la troisième pièce de ferrure (14) du fait que, lorsque la position de libération du pivotement est atteinte, elle arrive au contact de la butée d'arrêt (53) solidaire de la partie d'assise.

3. Ferrure selon la revendication 2, **caractérisée par le fait que** le palier (71) est implanté à proximité immédiate de la butée d'arrêt (53).

4. Ferrure selon l'une des revendications précédentes, **caractérisée par le fait que** l'élément d'actionnement (72) du déverrouillage du rail, pendant sa coopération avec la surface de butée, parcourt une course qui est indépendante du réglage de l'inclinaison du dossier (2) .

5. Ferrure selon l'une des revendications précédentes, **caractérisée par le fait que** l'élément d'actionnement (72) du déverrouillage de rails de siège est relié à une extrémité d'un câble Bowden (70) dont l'autre extrémité coopère avec le déverrouillage du rail de siège.

6. Ferrure selon l'une des revendications précédentes, **caractérisée par le fait que** l'élément d'actionnement (72) du déverrouillage de rails de siège est guidé dans une piste de guidage (73) en forme d'arc de cercle autour de l'axe (A).

7. Ferrure selon l'une des revendications 5 et 6, **caractérisée par le fait que** le câble Bowden (70), dans sa zone d'extrémité, a un trajet tangentiel à la piste de guidage (73) en forme d'arc de cercle.

8. Ferrure selon l'une des revendications précédentes, **caractérisée par le fait que** le palier (71) prend la forme d'un boîtier à l'intérieur duquel est disposé l'élément d'actionnement du déverrouillage de rails de siège, au moins avec une zone partielle, le palier (71) étant solidaire de la première pièce de ferrure (9) solidaire de la partie d'assise, d'un adaptateur (13) monté solidaire avec la partie d'assise ou d'une autre partie de la partie d'assise (3), en particulier un rail supérieur (6a) .

9. Ferrure selon l'une des revendications précédentes, **caractérisée par le fait que** l'élément d'actionnement (72) du déverrouillage des rails de siège est un coulisseau qui est relié à une extrémité d'un câble Bowden (70) et qui est guidé pour coulisser sur une piste de guidage (73) formée dans le palier (71), l'élément d'actionnement (72) faisant saillie par rapport au palier (71) par une première extrémité (72a) du coulisseau et étant solidarisé par l'autre extrémité (72b), seconde extrémité, du coulisseau avec l'âme (70b) du câble Bowden (70), tandis que la gaine (70a) du câble Bowden (70) est fixée sur le palier (71).

10. Ferrure selon la revendication 9, **caractérisée par le fait que** l'âme (70b) et la gaine (70a) du câble Bowden (70) sont précontraintes par un ressort si bien que l'élément d'actionnement (72), en particulier avec une première extrémité (72a) du coulisseau, ressort du palier (71).

11. Ferrure selon l'une des revendications précédentes, **caractérisée par le fait que** la surface de butée (74) sur la troisième pièce de ferrure (14) est orientée dans une direction radiale par rapport à l'axe (A).

12. Ferrure selon l'une des revendications précédentes, **caractérisée par le fait qu'**une butée (18, 19) est prévue pour limiter unilatéralement le mouvement de pivotement de la troisième pièce de ferrure (14) entre la position de libération du pivotement et la position d'usage.

13. Siège de véhicule, **caractérisé par** une ferrure (5) selon l'une des revendications précédentes.

14. Siège de véhicule selon la revendication 13, **caractérisé par le fait que**, sur le côté du siège de véhicule opposé à la ferrure (5), est montée une ferrure (5') dont la butée de verrouillage (53) coopère avec un cliquet d'immobilisation (94) afin d'immobiliser la troisième pièce de ferrure (14') dans la position de libération du pivotement.
